# DEMANDE DE BREVET EUROPEEN

(11) **EP 1 585 028 A1**
(43) Date de publication de la demande: **12.10.2005**
(21) Numéro de dépôt: 05102744.9
(22) Date de dépôt: 07.04.2005
(51) Int. Cl.: G06F 12/02, G06F 12/10

(54) **Procédé et dispositif de calcul d'adresses d'un programme stocké dans une mémoire segmentée**

(30) Priorité: 07.04.2004 FR 0450704
(71) Demandeur: STMicroelectronics SA, 92120 Montrouge (FR)
(72) Inventeur: Sonzogni, Jacques, 13710 Fuveau (FR)
(74) Mandataire: de Beaumont, Michel

(57) **Abrégé**

L'invention concerne un procédé et dispositif de conversion d'une adresse virtuelle (VIRTADD) d'un programme exécuté par un processeur et fournie par un compteur programme (24) en une adresse physique (PHYSADD) dans une mémoire programme (3), le programme ayant été stocké dans la mémoire dans au moins un segment (SEG1, SEG2) d'adresses consécutives. L'invention consiste à ajouter à chaque adresse fournie par le compteur programme un nombre correspondant au décalage entre l'adresse dans la mémoire et l'adresse virtuelle fournie par le compteur programme, et à détecter un éventuel débordement du segment courant en comparant l'adresse physique obtenue aux adresses de début et de fin du segment considéré.

## Description

La présente invention concerne de façon générale, l'exploitation d'une mémoire programme, c'est-à-dire d'une mémoire dans laquelle sont enregistrées des applications contenant des instructions ou codes opératoires à exécuter par un processeur, par opposition à ce que l'on appelle une mémoire de données dans laquelle les données variables traitées par un programme sont stockées. Une telle mémoire programme est généralement une mémoire non volatile, le cas échéant reprogrammable, stockant les lignes de programme.

Un exemple d'application de l'invention concerne les applications JAVA et notamment les applications destinées à être traitées au sein de cartes à puce, c'est-à-dire de dispositifs disposant d'un espace mémoire relativement restreint, requérant une segmentation de la mémoire afin de permettre le stockage dynamique des différentes applications.

Plus généralement, la présente invention s'applique à la gestion d'espaces mémoires programme dans laquelle les applications mémorisées doivent être stockées à des adresses discontinues en fonction de l'espace restant disponible dans la mémoire programme.

Classiquement, lors du stockage initial d'un programme dans une mémoire programme, le processeur associé à cette mémoire charge l'application dans des zones ou segments disponibles. Le processeur stocke alors également une table de correspondance d'adresses lui permettant de retrouver ultérieurement les lignes d'instruction à exécuter.

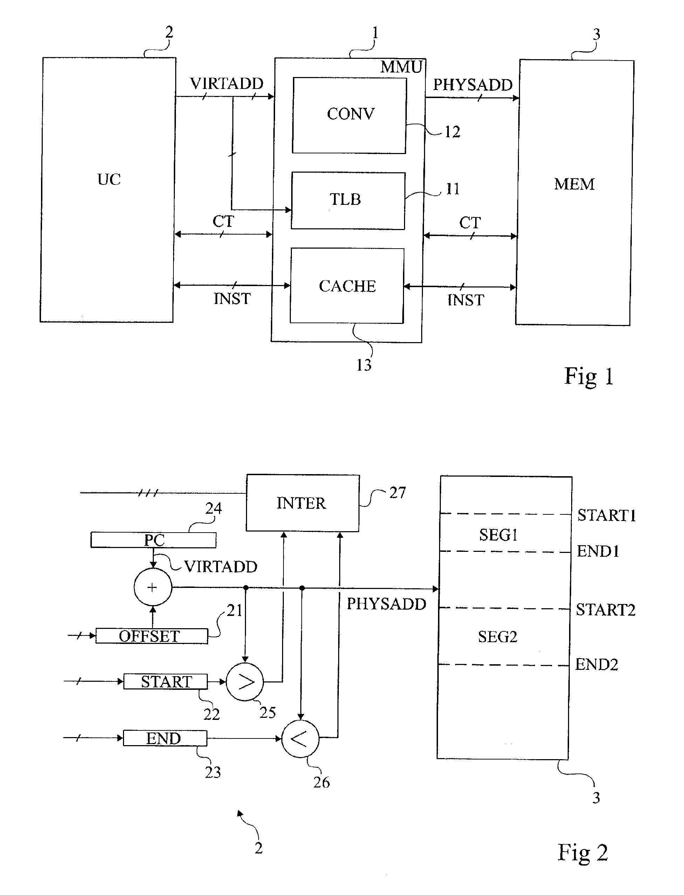

La figure 1 représente un exemple classique d'unité 1 de gestion de mémoire (MMU) servant généralement d'interface entre une unité centrale 2 (UC) traitant des données à partir de programmes stockés dans une mémoire programme 3 (MEM). Le rôle de l'interface est de convertir une adresse virtuelle VIRTADD fournie par l'unité centrale 2 en une adresse physique PHYSADD désignant la ligne mémoire dans laquelle est stockée l'instruction recherchée dans la mémoire 3. Une telle conversion est indispensable pour que des lignes d'instructions INST du programme puissent transiter de la mémoire vers l'unité centrale afin d'être exécutées.

Lors de l'installation du programme, c'est-à-dire de son stockage initial dans la mémoire 3, l'unité centrale 2 génère une table de conversion d'adresses 12 tenant la correspondance entre des adresses virtuelles (lignes successives du programme) et des adresses physiques de stockage dans la mémoire 3 en fonction de son espace disponible et notamment des segments disponibles. Par la suite, chaque fois que l'unité centrale 2 a besoin de charger une instruction pour son exécution, elle communique l'adresse virtuelle à l'interface 1 chargée de la convertir en une adresse physique. En pratique, afin de ne pas ralentir l'exécution du programme, l'interface 1 requiert un espace 13 de mémoire cache (CACHE) dans lequel sont stockées temporairement les instructions entre la mémoire 3 et l'unité centrale 2. Cette mémoire cache sert notamment à limiter les extractions et conversions en évitant d'extraire une instruction de la mémoire 3 à partir du moment où celle-ci est disponible dans la mémoire cache. Un bloc 11 de correspondance d'adresse (TLB), connu sous la dénomination "Translation Look aside Buffer", indique alors à la table 12 si un segment est ou non présent dans la mémoire 13.

La solution de gestion de mémoire (Memory Management Unit) telle qu'exposée en relation avec la figure 1 requiert donc l'utilisation d'une mémoire cache. Elle est de ce fait incompatible avec une application à des dispositifs intégrés de taille limitée, notamment de type carte à puce.

De plus, les dispositifs de conversion et tables de correspondance nécessaires, d'adresse à adresse, sont particulièrement volumineux.

L'article "A Method for Implementing Paged, Segmented Virtual Memories on Microprogrammable Computers" de Andrew S. Tanenbaum, paru en 1979 dans Operating Systems Review USA, vol. 13, no. 2, pages 26-32 (XP-002305693) décrit un procédé de conversion d'une adresse d'un compteur programme en une adresse dans une mémoire externe segmentée. Le passage d'un segment à un autre fait appel à une modification de la valeur du compteur programme. De plus, la détection des limites des segments dépend de l'information contenue aux adresses recherchées.

La présente invention vise à proposer un nouveau procédé et dispositif de conversion d'une adresse virtuelle d'un programme en une adresse physique d'une mémoire contenant l'instruction correspondante, qui pallie les inconvénients des solutions connues.

L'invention vise notamment à proposer une solution qui puisse être mise en oeuvre dans des circuits intégrés de taille réduite et notamment dans des cartes à puce.

La présente invention vise également à proposer une solution qui ne requiert pas l'utilisation d'une mémoire cache entre la mémoire programme et l'unité centrale.

Pour atteindre ces objets ainsi que d'autres, la présente invention prévoit un procédé de conversion d'une adresse virtuelle d'un programme exécuté par un processeur et fournie par un compteur programme en une adresse physique dans une mémoire programme, le programme ayant été stocké dans la mémoire dans au moins un segment d'adresses consécutives, consistant :
à ajouter à chaque adresse fournie par le compteur programme un nombre correspondant au décalage entre l'adresse dans la mémoire et l'adresse virtuelle fournie par le compteur programme ; et
à détecter un éventuel débordement du segment courant en comparant, indépendamment du contenu adressé, l'adresse physique obtenue aux adresses de début et de fin du segment considéré.

Selon un mode de mise en oeuvre de la présente invention, une table comprenant le nombre de segments ainsi que les adresses de début et de fin de chacun des segments est stockée, de préférence, dans une mémoire non volatile.

Selon un mode de mise en oeuvre de la présente invention, ladite table est établie lors du chargement initial du programme dans la mémoire.

Selon un mode de mise en oeuvre de la présente invention, le décalage à appliquer aux adresses fournies par le compteur programme et les adresses de début et de fin du segment courant sont mis à jour par le processeur à chaque changement de segment mémoire dans la mémoire externe.

L'invention prévoit également un dispositif de conversion d'une adresse virtuelle fournie par un compteur programme d'un processeur en une adresse physique d'une ligne d'instruction dans au moins un segment d'adresses consécutives d'une mémoire, comportant :
trois registres contenant respectivement un décalage à appliquer à l'adresse virtuelle, l'adresse physique de départ d'un segment courant dans la mémoire et l'adresse de fin du segment courant ;
des moyens pour ajouter à l'adresse fournie par le compteur programme, sans modifier la valeur de ce compteur, le nombre contenu dans le premier registre ; et
des moyens pour comparer l'adresse générée aux adresses respectives contenues dans les deuxième et troisième registres afin de détecter un éventuel débordement du segment courant.

Selon un mode de réalisation de la présente invention, les trois registres sont mis à jour par le processeur à chaque changement de segment mémoire dans la mémoire externe.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 qui a été décrite précédemment est destinée à exposer l'état de la technique et le problème posé ; et
la figure 2 illustre de façon très schématique et sous forme de blocs un mode de réalisation de la présente invention.

Les mêmes éléments ont été désignés par les mêmes références aux différentes figures. Pour des raisons de clarté, seuls les éléments qui sont nécessaires à la compréhension de l'invention ont été représentés aux figures et seront décrits par la suite. En particulier, l'invention est compatible avec toutes les mémoires programme classiques. De plus, côté unité centrale, la gestion des adresses virtuelles et l'exploitation faite par le microprocesseur des instructions extraites de la mémoire n'ont pas été détaillées et ne font pas l'objet de la présente invention.

Une caractéristique de la présente invention est de gérer la différence d'adresse entre une adresse virtuelle et physique au moyen d'un offset ou incrément de décalage d'adresse. L'invention tire pour cela profit du fait que, dans un même segment de la mémoire physique, des instructions qui sont contiguës du point de vue de leurs adresses virtuelles sont également contiguës ou successives du point de vue de leurs adresses physiques. Par conséquent, au sein d'un même segment mémoire, des instructions successives du point de vue de leurs adresses virtuelles se retrouvent aisément par mise à jour du compteur programme de l'unité centrale.

Pour être en mesure de calculer l'offset et de gérer différents segments de la mémoire physique dans lesquels est enregistré le programme, l'invention prévoit de préférence de stocker les adresses physiques de départ et de fin de chacun des segments mémoire. Ce stockage est effectué lors de l'installation du programme dans le système, donc de sa mémorisation initiale. Par la suite, les adresses de départ et de fin dans la mémoire externe restent non modifiées. En variante, seule l'adresse de départ ou de fin est stockée, ainsi que la taille du segment.

Ainsi, selon la présente invention, une adresse physique d'une ligne d'instruction dans une mémoire contenant un programme peut se calculer en ajoutant, à l'adresse virtuelle fournie par le compteur programme de l'unité centrale, le décalage ou offset affecté au segment correspondant de la mémoire. Ce décalage dépend notamment du type de code programme stocké et de la méthode selon laquelle la segmentation mémoire du programme a été faite, comme on le verra par la suite.

La mise en oeuvre de l'invention requiert, dans le mode de réalisation représenté, trois registres au sein de l'unité centrale pour stocker, respectivement, l'adresse de départ, l'adresse de fin du segment concerné ainsi que le décalage affecté à ce segment.

Les adresses physiques correspondant aux différents segments sont stockées dans une mémoire non volatile du produit qui sera lue par l'unité centrale à chaque mise à jour.

En figure 2, on suppose qu'un programme doit être stocké dans la mémoire 3 et requiert deux segments SEG1 et SEG2 distincts ayant des adresses physiques de départ et de fin respectives START1, END1 et START2, END2.

Lors du chargement du programme dans la mémoire 3, l'unité centrale 2 et le logiciel de gestion du chargement mémoire gardent dans une table de définition du programme le nombre de segments, l'identifiant du premier segment à traiter lors de l'exécution du programme, les adresses respectives de début et de fin des différents segments.

Avant l'activation du programme par le système opératoire ou le logiciel interpréteur, c'est-à-dire avant l'exécution du programme, des registres 21 (OFFSET), 22 (START) et 23 (END) dédiés à la mise en oeuvre de ce mode de réalisation de l'invention sont positionnés conformément à la définition du premier segment à exécuter. Ce positionnement est effectué à partir des informations contenues dans la table de définition de l'unité centrale 2.

Lorsque l'application est activée par le système opératoire ou le logiciel interpréteur, l'adresse physique PHYSADD est générée comme correspondant à la valeur fournie par le compteur programme 24 (PC), c'est-à-dire fournissant l'adresse virtuelle VIRTADD, à laquelle est ajouté le décalage contenu dans le registre 21. L'adresse physique générée est en parallèle comparée aux limites START1 et END1 par des comparateurs 25 et 26 (matériels) de l'unité centrale 2 afin de détecter le besoin de passer dans le deuxième segment de la mémoire 3. Dès que l'un des comparateurs 25 ou 26 détecte une sortie du segment 1, une interruption est générée et le système opératoire et/ou le logiciel interpréteur (symbolisés par un bloc 27, INTER) recharge les registres 21, 22 et 23 par les informations correspondant au nouveau segment visé d'après l'adresse appelée.

Un avantage de la présente invention est qu'il n'est pas nécessaire de modifier le registre 24 de compteur programme au cours de l'exécution du programme.

Un autre avantage de la présente invention est que le programme n'est pas nécessairement segmenté dans un ordre donné. En d'autres termes, le début du programme peut être contenu dans le deuxième segment et la fin du programme dans le premier segment.

Dans son application préférée aux cartes à puce, la présente invention tire profit du fait que la mémoire et l'unité centrale sont généralement intégrées ensemble, ce qui permet un accès mémoire simple et rapide ne requérant pas de mémoire cache.

Selon un premier exemple de mise en oeuvre, appliqué à un code programme en langage dit natif, le programme est initialement compilé avec une définition de l'espace mémoire adressable qui y est associé. En d'autres termes, tous les liens entre les instructions sont fixés lors de la compilation en fonction des adresses utilisées lors de cette compilation. Selon l'invention, lors du chargement en mémoire dans des zones libres, le programme se trouve découpé en segments dont les adresses physiques de débuts et de fin sont également stockées. Le décalage entre l'adresse de chaque début de segment physique et l'adresse compilée de l'instruction correspondante est, de préférence, calculé lors du chargement du programme en mémoire 3 et stocké dans la table. Par la suite, à chaque appel d'adresse (virtuelle) par le compteur programme, le décalage (positif ou négatif) associé au segment d'adresses physiques est ajouté au nombre du compteur programme et, de façon transparente pour ce dernier, la mémoire 3 est adressée avec l'adresse physique correcte.

Un autre avantage de l'invention est que sa mise en oeuvre par des moyens matériels permet de connaître à l'avance la taille des instructions du programme, ce que l'on appelle le jeu d'instructions du programme. Cet avantage est particulièrement intéressant dans une application à des programmes JAVA dans lesquels le lien avec l'espace adressable se fait au dernier moment lors du chargement du programme en mémoire et non lors de la compilation du programme propre à un processeur donné.

Dans cet exemple d'application, le décalage d'adresse utilisé par l'invention est en fait nul. En effet, l'adresse de compilation n'intervient pas dans le calcul d'adresse. Lors du démarrage de l'application, le compteur programme est chargé avec l'adresse physique de la première instruction en mémoire du segment considéré.

Bien entendu, la présente invention est susceptible de diverses variantes et modifications qui apparaîtront à l'homme de l'art. En particulier, les tailles à donner aux registres propres à l'invention sont à la portée de l'homme du métier à partir des indications fonctionnelles données ci-dessus. De plus, bien que l'invention ait été décrite en relation avec une application aux cartes à puce, celle-ci peut être mise en oeuvre dans d'autres systèmes.

## Revendications

1. Procédé de conversion d'une adresse virtuelle (VIRTADD) d'un programme exécuté par un processeur et fournie par un compteur programme (24) en une adresse physique (PHYSADD) dans une mémoire programme (3), le programme ayant été stocké dans la mémoire dans au moins un segment (SEG1, SEG2) d'adresses consécutives, **caractérisé en ce qu'**il consiste :
à ajouter à chaque adresse fournie par le compteur programme un nombre correspondant au décalage entre l'adresse dans la mémoire et l'adresse virtuelle fournie par le compteur programme ; et
à détecter un éventuel débordement du segment courant en comparant, indépendamment du contenu adressé, l'adresse physique obtenue aux adresses de début et de fin du segment considéré.

2. Procédé selon la revendication 1, dans lequel une table comprenant le nombre de segments (SEG1, SEG2) ainsi que les adresses de début et de fin de chacun des segments est stockée, de préférence, dans une mémoire non volatile.

3. Procédé selon la revendication 2, dans lequel ladite table est établie lors du chargement initial du programme dans la mémoire (3).

4. Procédé selon l'une quelconque des revendications 1 à 3, dans lequel le décalage à appliquer aux adresses fournies par le compteur programme (24) et les adresses de début et de fin du segment courant sont mis à jour par le processeur (2) à chaque changement de segment mémoire dans la mémoire externe (3) .

5. Dispositif de conversion d'une adresse virtuelle (VIRTADD) fournie par un compteur programme (24) d'un processeur (2) en une adresse physique (PHYSADD) d'une ligne d'instruction dans au moins un segment (SEG1, SEG2) d'adresses consécutives d'une mémoire (3), **caractérisé en ce qu'**il comporte :
trois registres (21, 22, 23) contenant respectivement un décalage à appliquer à l'adresse virtuelle, l'adresse physique de départ d'un segment courant dans la mémoire (3) et l'adresse de fin du segment courant ;
des moyens pour ajouter à l'adresse fournie par le compteur programme, sans modifier la valeur de ce compteur, le nombre contenu dans le premier registre ; et
des moyens pour comparer l'adresse générée aux adresses respectives contenues dans les deuxième et troisième registres afin de détecter un éventuel débordement du segment courant.

6. Dispositif selon la revendication 5, dans lequel les trois registres sont mis à jour par le processeur (2) à chaque changement de segment mémoire dans la mémoire externe (3).
